# EUROPEAN PATENT SPECIFICATION

(11) **EP 2 232 753 B1**
(45) Date of publication and mention of the grant of the patent: **22.09.2021**
(21) Application number: 08702183.8
(22) Date of filing: 04.01.2008
(51) Int. Cl.: H04L 1/00, H04L 29/08, H04W 88/08, H04W 88/02, H04W 28/06, H04L 29/06, H04W 80/02

(54) **DUMMY PADDING SUB-HEADER IN MAC PROTOCOL DATA UNITS**
DUMMY-PADDING-SUB-HEADER IN MAC-PROTOKOLL-DATENEINHEITEN
SOUS EN-TÊTE FACTICE DE REMPLISSAGE DANS DES UNITÉS DE DONNÉES DE PROTOCOLE MAC

(43) Date of publication of application: 29.09.2010
(73) Proprietor: Nokia Technologies Oy, 02610 Espoo (FI)
(72) Inventor: KASHIMA, Tsuyoshi, Tokyo 108-0072 (JP); MALKAMAKI, Esa, FIN-02130 Espoo (FI)
(74) Representative: Papula Oy
(86) International application number: PCT/IB2008/000014
(87) International publication number: WO 2009/087430

(56) References cited:
- EP-A2- 1 566 925
- US-A- 5 802 064
- US-A1- 2006 171 417
- US-A1- 2007 253 383
- ERICSSON: "MAC header structure", 3GPP DRAFT; R2-073219_MAC_HEADER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20070814, 14 August 2007 (2007-08-14), XP050135947, [retrieved on 2007-08-14]
- NOKIA CORPORATION ET AL: "Mac Padding", 3RD GENERATION PARTNERSHIP PROJECT (3GPP); TECHNICALSPECIFICATION GROUP (TSG) RADIO ACCESS NETWORK (RAN); WORKINGGROUP 2 (WG2), XX, XX, vol. R2-080682/080096, 11 February 2008 (2008-02-11), pages 1-3, XP003022800,
- 'Technical Specification Group Radio Access Network; Evolved Universal Terrestrial Radio Access (E-UTRA) Medium Access Control (MAC) protocol specification (Release 8)' 3GPP TS 36.321 V8.0.0 (2007-12) 3RD GENERATION PARTNERSHIP PROJECT pages 19 - 21, XP002522112
- ERICSSON: 'MAC PDU Structure' 3GPP TSG-RAN WG2 #58BIS, TDOC R2-072563 25 June 2007, ORLANDO, USA, pages 1 - 4, XP003021558
- NOKIA CORPORATION ET AL: '3GPP TSG-RAN WG2 Meeting #61, R2-080096, R2-080682', 11 February 2008, SORRENTO, ITALY deel 'Mac Padding', XP003022800

## Description

### BACKGROUND

Radio communication systems, such as a wireless data networks (e.g., Third Generation Partnership Project (3GPP) Long Term Evolution (LTE) systems, spread spectrum systems (such as Code Division Multiple Access (CDMA) networks), Time Division Multiple Access (TDMA) networks, WiMAX (Worldwide Interoperability for Microwave Access), etc.), provide users with the convenience of mobility along with a rich set of services and features. This convenience has spawned significant adoption by an ever growing number of consumers as an accepted mode of communication for business and personal uses. To promote greater adoption, the telecommunication industry, from manufacturers to service providers, has agreed at great expense and effort to develop standards for communication protocols that underlie the various services and features. One area of effort involves the construction of data units, which are necessary to exchange information over the network. The fields and associated formats of these data units are designed to ensure reliable transmission, while minimizing overhead (i.e., maximizing throughput). Segmentation of the data units is a mechanism that provides protocol compatibility at the various protocol layers, as different protocols are likely to have different size requirements for payload and overhead fields. However, segmentation increases protocol overhead, and thus, wasting precious bandwidth.

"MAC header structure", R2-073219, ERICSSON, 3GPP TSG-RAN WG2 #59, Athens, Greece, 20-24 August 2007, provides a proposal for the MAC header structure.

### SOME EXEMPLARY EMBODIMENTS

Therefore, there is a need for an approach for selectively applying segmentation to minimize signaling overhead.

The invention is defined by the claims 1, 5, 10, 11, 13 and 16.

According to one embodiment of the invention, a method comprises generating a medium access control, MAC, protocol data unit including a header part and a payload part. The method also comprises inserting at least one dummy padding sub-header at the beginning of the header part of the MAC protocol data unit, wherein padding is only within the header part and wherein the header part is padded with dummy bits to fit a transport block size.

According to another embodiment of the invention, an apparatus comprises means for generating a medium access control, MAC, protocol data unit including a header part and a payload part, and inserting at least one dummy padding sub-header at the beginning of the header part of the MAC protocol data unit, wherein padding is only within the header part and wherein the header part is padded with dummy bits to fit a transport block size.

According to another embodiment of the invention, a method comprises receiving a medium access control, MAC, protocol data unit including a header part and a payload part, that includes at least one dummy padding sub-header at the beginning of the header part of the MAC protocol data unit, wherein padding is only within the header part and wherein the header part has been padded with dummy bits to fit a transport block size.

According to yet another embodiment of the invention, there is provided a computer program product for performing a method comprising: generating a medium access control, MAC, protocol data unit including a header part and a payload part, and inserting at least one dummy padding sub-header at the beginning of the header part of the MAC protocol data unit, wherein padding is only within the header part and wherein the header part is padded with dummy bits to fit a transport block size. According to yet another embodiment of the invention, there is provided a computer program product for performing a method comprising: receiving a medium access control, MAC, protocol data unit including a header part and a payload part, that includes at least one dummy padding sub-header at the beginning of the header part of the MAC protocol data unit, wherein padding is only within the header part and wherein the header part has been padded with dummy bits to fit a transport block size.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the scope of the invention. Accordingly, the drawings and description are to be regarded as illustrative in nature, and not as restrictive.

### BRIEF DESCRIPTION OF THE DRAWINGS

The embodiments of the invention are illustrated by way of example, and not by way of limitation, in the figures of the accompanying drawings:
FIG. 1 is a diagram of a communication system capable of utilizing protocol data unit padding, according to various exemplary embodiments of the invention;
FIG. 2 is a diagram of a Media Access Control (MAC) protocol data unit (PDU), in accordance with an embodiment of the invention;
FIGs. 3A-3C are exemplary MAC PDU formats encompassing Radio Link Control (RLC) PDUs of different lengths;
FIG. 4 is a diagram of a sub-header format utilized for padding, in accordance with an embodiment of the invention;
FIGs. 5A and 5B are flowcharts of processes for padding to avoid segmentation, in accordance with an embodiment of the invention;
FIGs. 6A- 6D are exemplary MAC PDU formats employing dummy padding, in accordance with an embodiment of the invention;
FIGs. 7A-7D are diagrams of communication systems having exemplary long-term evolution (LTE) and E-UTRA (Evolved Universal Terrestrial Radio Access) architectures, in which the system of FIG. 1 can operate, according to various exemplary embodiments of the invention;
FIG. 8 is a diagram of hardware that can be used to implement an embodiment of the invention; and
FIG. 9 is a diagram of exemplary components of an LTE terminal capable of operating in the systems of FIGs. 7A-7D, according to an embodiment of the invention.

### DESCRIPTION OF PREFERRED EMBODIMENTS

An apparatus, method, and software for padding a protocol data unit are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

Although the embodiments of the invention are discussed with respect to a communication network having a Third Generation Partnership Project (3GPP) Long Term Evolution (LTE) architecture, it is recognized by one of ordinary skill in the art that the embodiments of the inventions have applicability to any type of communication system and equivalent functional capabilities.

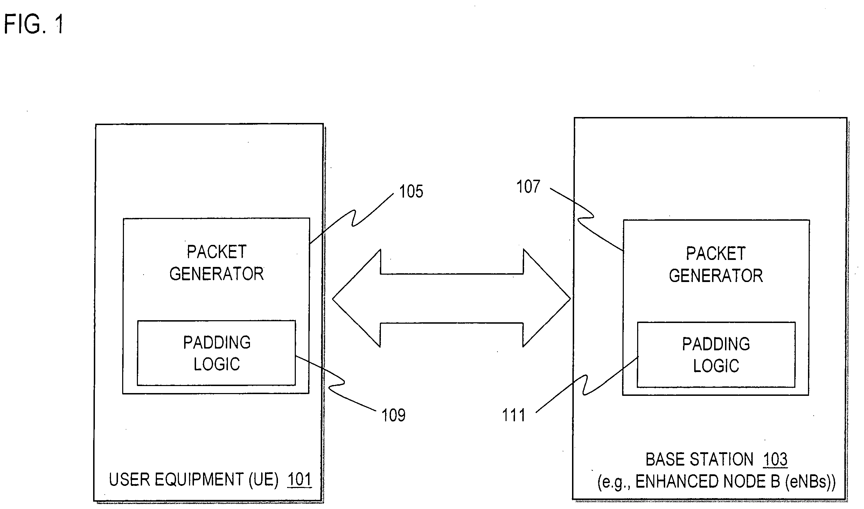

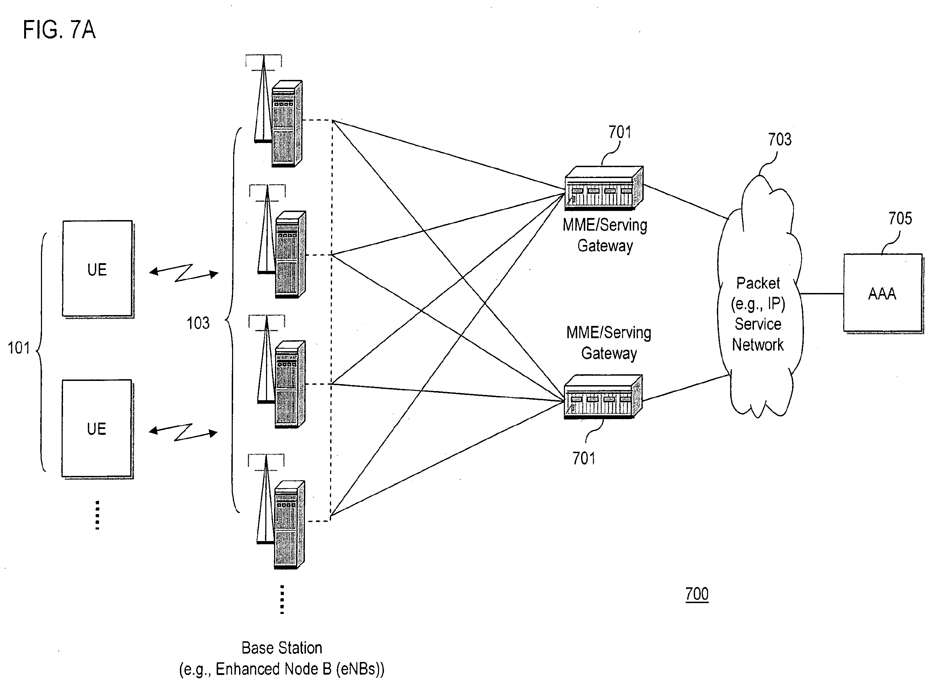

FIG. 1 is a diagram of a communication system capable of utilizing protocol data unit padding, according to various exemplary embodiments of the invention. As shown in FIG. 1, one or more user equipment (UEs) 101 communicate with a base station 103, which is part of an access network (e.g., WiMAX, 3GPP LTE (or E-UTRAN or 3.9G), etc.). Under the 3GPP LTE architecture (as shown in FIGs. 7A-7D), base station 103 is denoted as an enhanced Node B (eNB). The UE 101 can be any type of mobile stations, such as handsets, terminals, stations, units, devices, or any type of interface to the user (such as "wearable" circuitry, etc.). The base station 103, in an exemplary embodiment, uses OFDM (Orthogonal Frequency Divisional Multiplexing) as a downlink (DL) transmission scheme and a single-carrier transmission (e.g., SC-FDMA (Single Carrier-Frequency Division Multiple Access) with cyclic prefix for the uplink (UL) transmission scheme. SC-FDMA can be realized also using DFT-S-OFDM principle, which is detailed in 3GGP TR 25.814, entitled "Physical Layer Aspects for Evolved UTRA," v.1.5.0, May 2006. SC-FDMA, also referred to as Multi-User-SC-FDMA, allows multiple users to transmit simultaneously on different sub-bands.

The UE 101 and eNB 103 include packet generators 105, 107 for generating data units (e.g., data packets). According to one embodiment, each of the packet generators includes padding logic 109, 111, which can operate at the Medium Access Control (MAC) layer to perform padding of a MAC PDU either by padding the MAC header (or sub-header) or the payload part or both. The MAC layer protocol is further detailed in 3GPP TS 36.321, entitled "Technical Specification Group Radio Access Network; Evolved Universal Terrestrial Radio Access (E-UTRA) Medium Access Control (MAC) protocol specification," v.2.0.0 (Release 8). By way of example, a Radio Link Control (RLC) sub-layer, as implemented by the packet generator 105, 107, uses dynamic PDU sizing to build each PDU according to the requested size by a lower layer protocol.

In general, a Service Data Unit (SDU) of a protocol layer is defined within a data unit, and is received from a next higher protocol layer. The protocol layer processes the SDU, which in case of a Radio Link Control (RLC) protocol, may require segmentation of the SDU into fragments. As a result of the protocol processing, the SDU is transformed or partitioned into one or more PDUs. These fragments are provided with an RLC header, which contains a sequence number, and form the payload or content of an RLC PDU. These RLC PDUs are processed in the MAC layer, which attaches a MAC header. Thereafter, the RLC PDUs (with or without MAC header) are provided as MAC SDUs to a subjacent protocol layer.

As evident from the above discussion, to allow for the transfer of variable size data blocks, the Radio Link Control (RLC) layer provides a segmentation and re-assembly multiplexing function. The segmentation and re-assembly multiplexing function reduces the size of the data unit prior to transmission RLC and is used when the transferred data block is larger than the maximum allowed Transport Block (TB) size. The segmentation size can be determined by the difference between the RLC PDU size and the header size of the RLC PDU. The size of the MAC PDU may be determined from a sum of the RLC PDU size, and the size of the MAC header. The padding function in MAC layer increases the data block or segmented data block size by padding with extra or "dummy" bits to fit a TB size. The RLC sub layer uses PDU size to build each PDU to the requested size by the lower layer. Each PDU can have multiple SDUs (Service Data Units) and segmentation of SDUs can be employed to fit within a given TB size.

In effect, using a relatively small RLC PDU results in a lower transfer data to control information ratio, consequently resulting in a less efficient use of radio resources. Likewise, the greater the difference between the transferred data block size and the next larger allowed TB size results in lowering the transfer data to used physical resources ratio consequently resulting in a less efficient use of radio resources. Therefore, maximizing the TB size is desired. The segmentation causes decreasing the size of the TB, thereby increasing RLC and MAC signaling overhead. Radio Resource Control (RRC) signaling is required between the UE 101 and eNB 103 to define the attributes of each established transport channels, including a list of potential transport block (TB) sizes. Alternatively, the list of TB sizes may be specified in the standard (as in High-Speed Downlink Packet Access (HSDPA) or High-Speed Uplink Packet Access (HSUPA)). Each transport block unit is transmitted in a given Transmission Time Interval (TTI). Signaling over the radio interface introduces system overhead, which reduces the physical resources available for user data transmission.

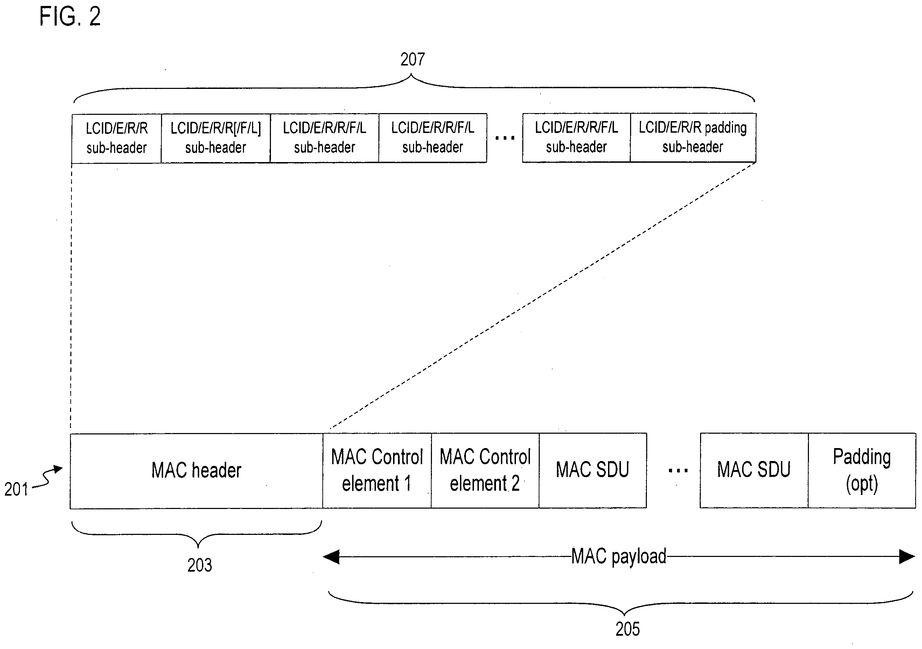

FIG. 2 is a diagram of a Media Access Control (MAC) protocol data unit (PDU), in accordance with an embodiment of the invention. A MAC PDU 201 includes a MAC header 203 and a MAC payload 205. The payload 205 can include MAC Control elements, one or more MAC Service Data Units (SDUs) (e.g., RLC PDU) as well as an optional padding field. In this example, the MAC Control elements are placed before the MAC SDUs, and the padding field is situated at the end of the MAC PDU 201. It is noted that MAC SDUs are of dynamic size and are built according to the size of the MAC PDU. Both the MAC header and the MAC SDUs are of variable sizes.

As shown, the MAC PDU header 203 includes one or more MAC PDU sub-headers 207 for each corresponding payload element, where each sub-header is defined as a combination of header information elements. By way of example, the sub-header includes the following header fields: a Logical Channel ID (LCID), an Extension bit (E) and Reserved bits (R) i.e., LCID/E/R/R. The LCID field identifies the logical channel instance of the corresponding MAC SDU or the type of the corresponding MAC Control element or padding for the DL (Down Link) and UL-SCH (Up Link Shared Channel), respectively. The intermediate sub-headers have the following format: LCID/E/R/R/F/L (where F denotes a Format field and L denotes a Length field). In general, all the sub-headers, except the last one, utilize the F and L fields. In an exemplary embodiment, a maximum of one MAC PDU can be transmitted per TB per UE, depending on the physical layer category.

To better appreciate the padding mechanism, MAC PDUs are further described with respect to encapsulation of RLC PDUs.

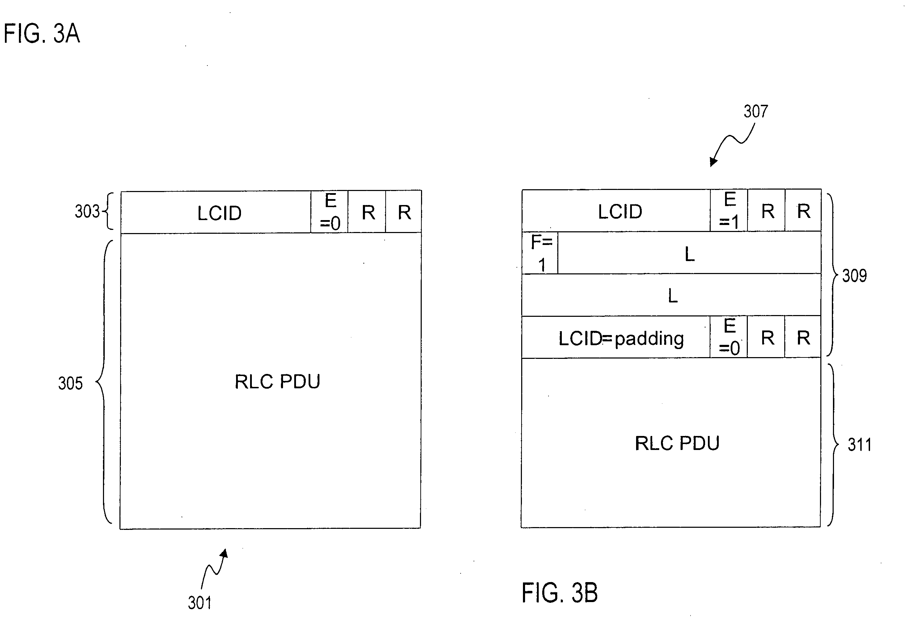

FIGs. 3A-3C are exemplary MAC PDU formats encompassing Radio Link Control (RLC) PDUs of different lengths. A MAC PDU 301 employs the following header fields 303: LCID/E/R/R. In this example, the MAC PDU size is the size of the RLC PDU 305 plus 1 byte. This is the typical case when there is only one RLC PDU per MAC PDU, i.e., no MAC level multiplexing: the RLC PDU size is selected (i.e., RLC SDU is segmented) such that it is one byte shorter than the allowed MAC PDU size. Then only one byte MAC header is enough telling the logical channel ID.

In another embodiment, a MAC PDU 307 has the following header fields 309: LCID/E/R/R/F/L/LCID/E/R/R. As such, the MAC PDU size totals the size of the RLC PDU 311 plus 4 bytes. This MAC PDU 307 holds a relatively reduced RLC PDU 311 and can be used e.g., for various real-time applications, such as Voice over Internet Protocol (VoIP), as well as any RLC unacknowledged mode (UM) or acknowledged mode (AM) data if the RLC PDU is shorter than the requested (for instance, a last RLC SDU of a data burst or shorter VoIP packet). The F field, as a single bit, can be set (e.g., to "1") to indicate the size of the Length field. It is noted that one F field is utilized per MAC SDU, with the exception of the last MAC SDU.

In the example of MAC PDU 301, no padding is needed. With the MAC PDU 307, padding of one byte is utilized after inserting the RLC PDU and the necessary MAC header fields (LCID/E/R/R and F/L). This can be implemented by adding the normal MAC header indicating padding (LCID reserved for padding + E=0), but no actual padding is needed at the end of the MAC PDU. Padding bytes are added at the end of the MAC PDU when more padding is needed.

The L field indicates the length of the corresponding MAC SDU or MAC Control element (e.g., in bytes). According to one embodiment, there is one L field per MAC SDU included in the MAC PDU 307, except for the last MAC SDU. For MAC Control elements, the presence of an L field depends on the type of MAC Control element. The size of the L field is indicated by the F field.

The Extension (E) field is a flag that specifies whether more fields are present in the MAC header. The E field can be used not only for the extension of the next LCID/E/R/R, but also for the associated Format field (F)/Length field (L). For instance, if E is set to "1," F/L and another set of LCID/R/R/E fields follow. However, if E is set to "0," either a MAC SDU, a MAC control element or padding start at the next byte. In this example, the difference in length of the MAC PDU based on the setting of the extension field (i.e., E= "0" and E= "1") is 2-bytes due to the F and L fields, and 1-byte due to the sub-header indicating padding.

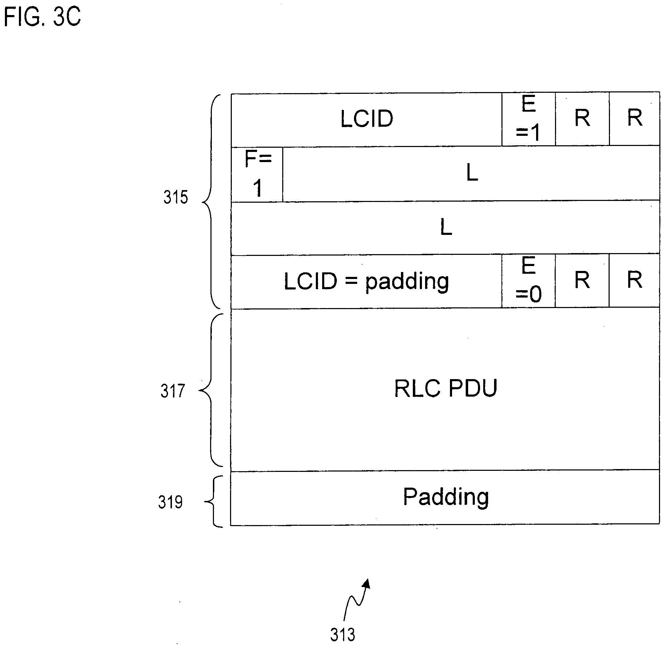

If a single RLC PDU is 1 byte shorter than MAC PDU, then no length field is needed since the TB size indicates the length. If the difference is 4 bytes or more (as shown in FIG. 3C), then normal (already agreed and specified) padding can be used in the MAC PDU 313, i.e., LCID + E=1 specifies that L follows and that length field indicates the length of RLC PDU. In the header 315, with E set to 1, this indicates that another LCID+E follows; therefore, a padding header is needed (LCID=11111 is reserved for padding). Also, an E is set to 0 to indicate that data follows. The header 315 is followed by an RLC PDU 317 and the corresponding padding field 319.

If the difference of RLC PDU and MAC PDU is 2 or 3 bytes, it is not possible to indicate with the existing standard. In other words, the scenarios in which the difference between the MAC PDU size and the RLC PDU size is 2 and 3 bytes cannot be supported with the above described approach without applying segmentation. As mentioned, segmentation increases overhead. Alternatively, a larger MAC PDU size, and thus also larger TB size, can be used. This is especially true in the downlink where the eNB can decide the TB size freely. However, the use of a larger TB size simply to accommodate a (unnecessary) larger MAC header size is also wasting capacity.

To avoid the unnecessary segmentation or unnecessary increase of MAC header and PDU size, an enhancement for the padding mechanism is proposed.

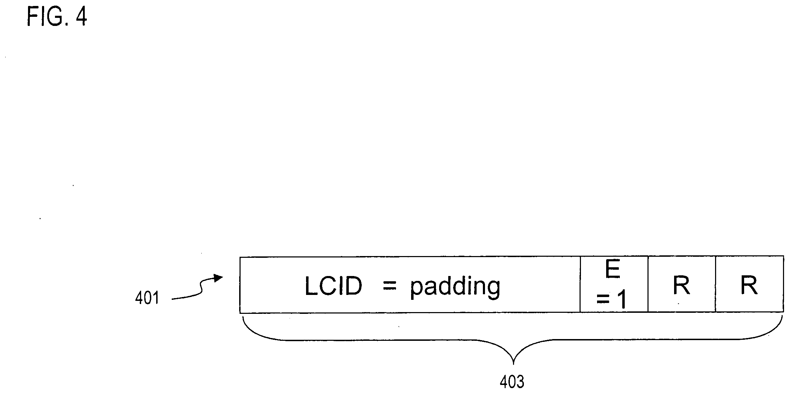

FIG. 4 is a diagram of a sub-header format utilized for padding, in accordance with an embodiment of the invention. A MAC sub-header 401 includes four header fields 403: LCID/E/R/R The LCID field is reserved for indicating whether padding is utilized. In an exemplary embodiment, padding is placed at the end of the transport block (TB) if padding bits are present. The MAC sub-header 401 can be used to implement the dummy padding mechanism, as next explained.

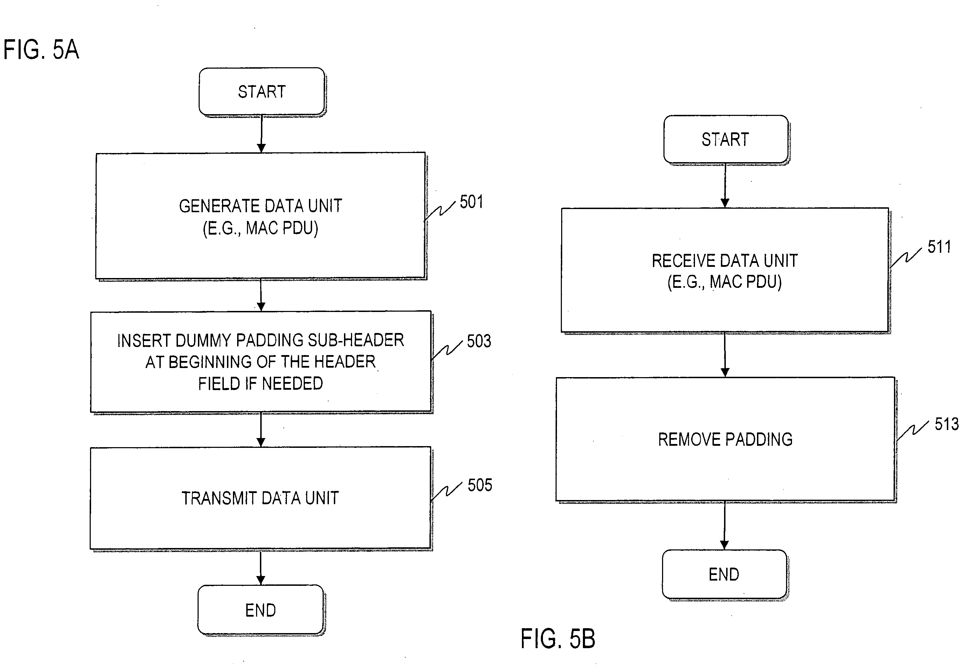

FIGs. 5A and 5B are flowcharts of processes for padding by a few bytes, e.g., to avoid segmentation, in accordance with an embodiment of the invention. In step 501, eNB 103 (of FIG. 1), for example, generates via the packet generator 107 a packet that includes a data unit (e.g., MAC PDU) for transmission to the UE 101. In step 503, a dummy padding sub-header is inserted by the padding logic 111 at beginning of the header field, e.g., to avoid segmentation. In step 505, the eNB 103 transmits the data unit with the padding, such that no segmentation is performed, thereby minimizing the protocol overhead.

On the receive side, when the UE 101 receives the data unit, as in step 511, the UE 101 removes the padding (per step 513). It should be noted that the transmitter can also be the UE and the receiver the eNB, in fact, this may be a more typical case.

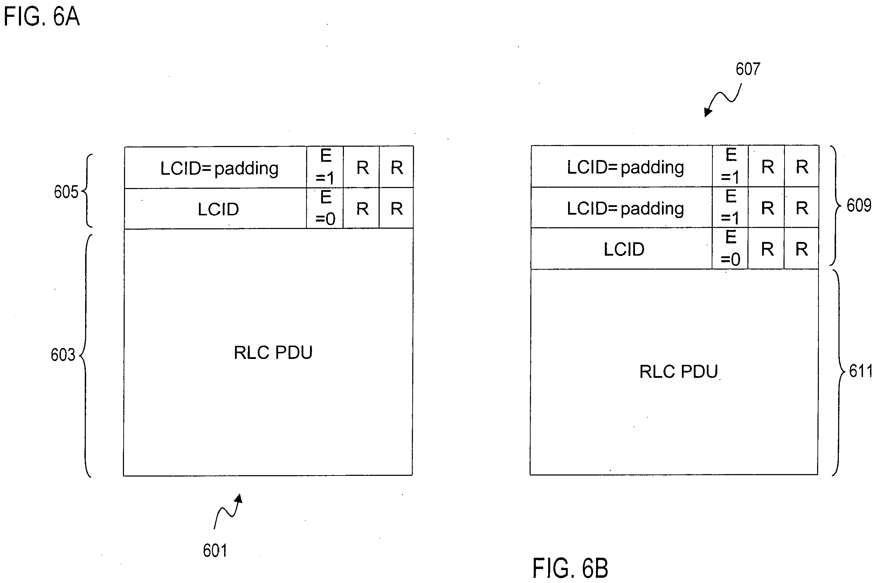

FIGs. 6A-6D are exemplary MAC PDU formats employing dummy padding, in accordance with an embodiment of the invention. Two cases are shown in FIGs. 6A and 6B, wherein the differences in PDU sizes (i.e., MAC PDU size - RLC PDU size) are 2 and 3 bytes, respectively. A MAC PDU 601 includes an RLC PDU 603 and the following header fields: LCID/E/R/R and LCID/E/R/R. The first set of sub-headers has an LCID field designated as padding and is situated at the beginning or start of the MAC PDU 601.

In FIG. 6B, a MAC PDU 607 includes header fields 609, which encompass three sub-headers of LCID/E/R/R. As seen, the first two sub-headers are designated as padding. An RLC PDU 611, having a smaller size than the RLC PDU 603, is also included in the MAC PDU 607.

Traditionally, segmentation of the MAC PDUs 601, 607 would be required. By contrast, the padding mechanism involves determining the payload size according to the lowest data rate by eliminating Format (F) field and Length (L) fields; the maximum RLC PDU size can be achieved by bypassing segmentation according to what is considered optimal for the radio resource usage.

Normally the extension flag E=1 indicates that an F-flag and a length field follow as well as another sub-header (LCID/E/R/R). In this special case with padding (LCID=11111) E=1 does not indicate that F and L follow, but only that another sub-header (LCID/E/R/R) follows. Thus the receiver when reading the header notices from the special value of LCID (=11111) that next sub-header follows immediately (without F and L fields). In this instance, it is assumed that the same LCID value as for normal padding is used also in this special case. This has the advantage that no extra LCIDs need to be reserved. However, it is also possible to reserve another LCID for this purpose.

In principle, the special (dummy) padding sub-header could be in any position within the header. However, if e.g., in FIG. 6A, the order of the sub-headers were changed, i.e., the LCID indicating the real logical channel ID were first, then having E=0 indicates that data follows, and the padding sub-header would be interpreted as data. If the extension flag were changed to E=1, then F and L should follow. Thus the dummy padding sub-header in these cases has to be at the beginning of the header.

The normal padding is indicated by inserting the padding sub-header (LCID=11111, E=0) at the end of the MAC header. It indicates that the extra bytes at the end of the MAC PDU not included in the MAC header, MAC control PDUs or MAC SDUs (=RLC PDU) are padding. The dummy padding sub-header, according to certain embodiments, can use the same special value of LCID=11111, and be placed at the beginning of the MAC header.

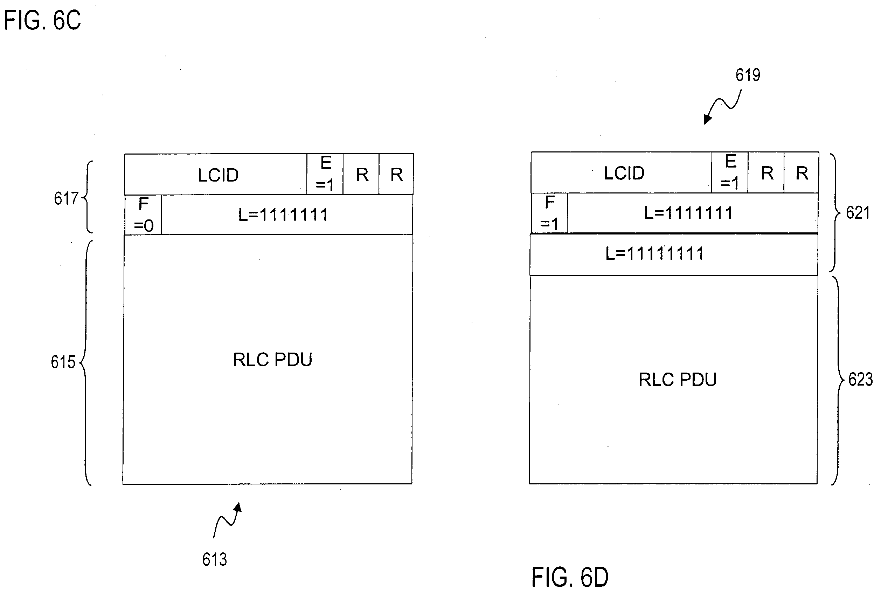

Alternatively, padding of 1 or 2 bytes can be indicated through the use of a special value of the length field L. For example, if one byte padding is needed, F could be set to F=0 to indicate that short L field follows; and L could be set to a reserved value, e.g., L=0000000 or L=1111111 as shown in FIG. 6C. Under this scenario, the MAC PDU 613 provides a header 615 with L=1111111, which is followed by a RLC PDU 617.

Similarly (as shown in FIG. 6D), the MAC PDU 619 can employ a header 621 whereby if padding of 2 bytes is needed, F could be set to indicate long L field (F=1) and special value reserved for L, e.g., L=000000000000000 or L=111111111111111. The special value of L field then indicates that no further sub-headers follow and that no real length field is present; and thus, the length of RLC PDU is calculated from transport block size. In this alternative, the F flag and the following L field with special (reserved) value constitute the dummy padding sub-header. This type of dummy padding sub-header is at the end of the header 621.

A common feature for these different dummy padding sub-headers described above is that the MAC PDUs with the dummy padding sub-header do not have any (data) padding bytes at the end of the MAC PDU. Thus, the dummy padding sub-headers introduce the padding of the MAC PDU into the MAC header instead of the normal padding at the end of the MAC PDU in the payload part. It is noted that one byte of the normal padding can be in the MAC header in the form of the normal padding sub-header, and the rest can be in the payload part at the end of the MAC PDU.

FIGs. 7A-7D are diagrams of communication systems having exemplary long-term evolution (LTE) architectures, in which the system of FIG. 1 can operate, according to various exemplary embodiments of the invention. By way of example (shown in FIG. 7A), the base station 103 and the UE 101 can communicate in system 700 using any access scheme, such as Time Division Multiple Access (TDMA), Code Division Multiple Access (CDMA), Wideband Code Division Multiple Access (WCDMA), Orthogonal Frequency Division Multiple Access (OFDMA) or Single Carrier Frequency Division Multiple Access (FDMA) (SC-FDMA) or a combination of thereof. In an exemplary embodiment, both uplink and downlink can utilize WCDMA In another exemplary embodiment, uplink utilizes SC-FDMA, while downlink utilizes OFDMA.

The MME (Mobile Management Entity)/Serving Gateways 701 are connected to the eNBs 103 in a full or partial mesh configuration using tunneling over a packet transport network (e.g., Internet Protocol (IP) network) 703. Exemplary functions of the MME/Serving GW 701 include distribution of paging messages to the eNBs 103, termination of U-plane packets for paging reasons, and switching of U-plane for support of UE mobility. Since the GWs 701 serve as a gateway to external networks, e.g., the Internet or private networks 703, the GWs 701 include an Access, Authorization and Accounting system (AAA) 705 to securely determine the identity and privileges of a user and to track each user's activities. Namely, the MME Serving Gateway 701 is the key control-node for the LTE access-network and is responsible for idle mode UE tracking and paging procedure including retransmissions. Also, the MME 701 is involved in the bearer activation/deactivation process and is responsible for selecting the SGW (Serving Gateway) for a UE at the initial attach and at time of intra-LTE handover involving Core Network (CN) node relocation.

A more detailed description of the LTE interface is provided in 3GPP TR 25.813, entitled "E-UTRA and E-UTRAN: Radio Interface Protocol Aspects,".

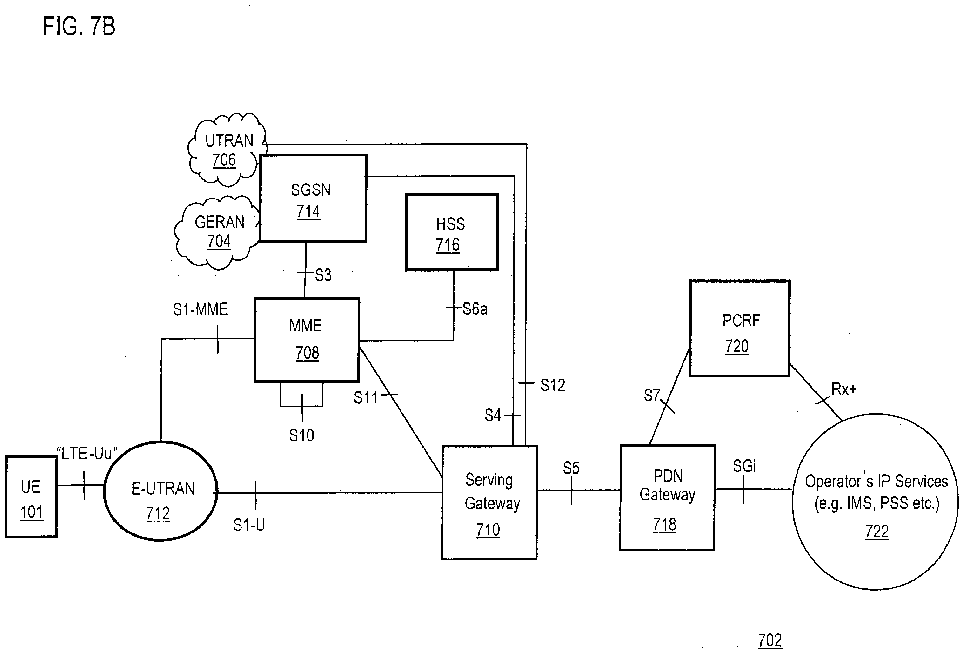

In FIG. 7B, a communication system 702 supports GERAN (GSM/EDGE radio access) 704, and UTRAN 706 based access networks, E-UTRAN 712 and non-3GPP (not shown) based access networks, and is more fully described in TR 23.882. A key feature of this system is the separation of the network entity that performs control-plane functionality (MME 708) from the network entity that performs bearer-plane functionality (Serving Gateway 710) with a well defined open interface between them S11. Since E-UTRAN 712 provides higher bandwidths to enable new services as well as to improve existing ones, separation of MME 708 from Serving Gateway 710 implies that Serving Gateway 710 can be based on a platform optimized for signaling transactions. This scheme enables selection of more cost-effective platforms for, as well as independent scaling of, each of these two elements. Service providers can also select optimized topological locations of Serving Gateways 710 within the network independent of the locations of MMEs 708 in order to reduce optimized bandwidth latencies and avoid concentrated points of failure.

The basic architecture of the system 702 contains following network elements. As seen in FIG. 7B, the E-UTRAN (e.g., eNB) 712 interfaces with UE 101 via LTE-Uu. The E-UTRAN 712 supports LTE air interface and includes functions for radio resource control (RRC) functionality corresponding to the control plane MME 708. The E-UTRAN 712 also performs a variety of functions including radio resource management, admission control, scheduling, enforcement of negotiated uplink (UL) QoS (Quality of Service), cell information broadcast, ciphering/deciphering of user, compression/decompression of downlink and uplink user plane packet headers and Packet Data Convergence Protocol (PDCP).

The MME 708, as a key control node, is responsible for managing mobility UE identifies and security parameters and paging procedure including retransmissions. The MME 708 is involved in the bearer activation/deactivation process and is also responsible for choosing Serving Gateway 710 for the UE 101. MME 708 functions include Non Access Stratum (NAS) signaling and related security. MME 708 checks the authorization of the UE 101 to camp on the service provider's Public Land Mobile Network (PLMN) and enforces UE 101 roaming restrictions. The MME 708 also provides the control plane function for mobility between LTE and 2G/3G access networks with the S3 interface terminating at the MME 708 from the SGSN (Serving GPRS Support Node) 714.

The SGSN 714 is responsible for the delivery of data packets from and to the mobile stations within its geographical service area. Its tasks include packet routing and transfer, mobility management, logical link management, and authentication and charging functions. The S6a interface enables transfer of subscription and authentication data for authenticating/authorizing user access to the evolved system (AAA interface) between MME 708 and HSS (Home Subscriber Server) 716. The S10 interface between MMEs 708 provides MME relocation and MME 708 to MME 708 information transfer. The Serving Gateway 710 is the node that terminates the interface towards the E-UTRAN 712 via S1-U.

The S1-U interface provides a per bearer user plane tunneling between the E-UTRAN 712 and Serving Gateway 710. It contains support for path switching during handover between eNBs 712. The S4 interface provides the user plane with related control and mobility support between SGSN 714 and the 3GPP Anchor function of Serving Gateway 710.

The S12 is an interface between UTRAN 706 and Serving Gateway 710. Packet Data Network (PDN) Gateway 718 provides connectivity to the UE 101 to external packet data networks by being the point of exit and entry of traffic for the UE 101. The PDN Gateway 718 performs policy enforcement, packet filtering for each user, charging support, lawful interception and packet screening. Another role of the PDN Gateway 718 is to act as the anchor for mobility between 3GPP and non-3GPP technologies such as WiMax and 3GPP2 (CDMA IX and EvDO (Evolution Data Only)).

The S7 interface provides transfer of QoS policy and charging rules from PCRF (Policy and Charging Role Function) 720 to Policy and Charging Enforcement Function (PCEF) in the PDN Gateway 718. The SGi interface is the interface between the PDN Gateway and the operator's IP services including packet data network 722. Packet data network 722 may be an operator external public or private packet data network or an intra operator packet data network, e.g., for provision of IMS (IP Multimedia Subsystem) services. Rx+ is the interface between the PCRF and the packet data network 722.

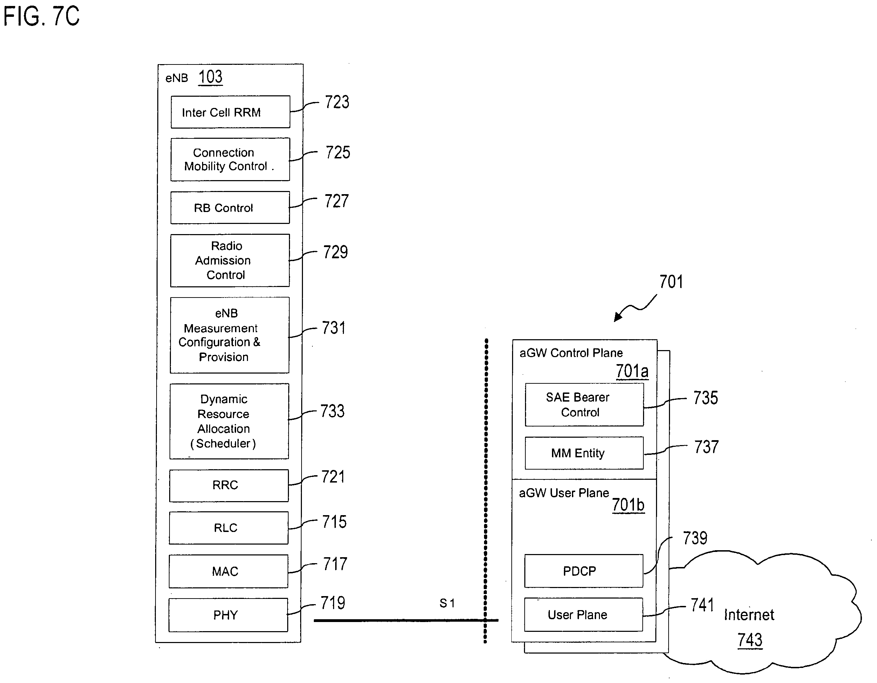

As seen in FIG. 7C, the eNB 103 utilizes an E-UTRA (Evolved Universal Terrestrial Radio Access) (user plane, e.g., RLC (Radio Link Control) 715, MAC (Media Access Control) 717, and PHY (Physical) 719, as well as a control plane (e.g., RRC 721)). The eNB 103 also includes the following functions: Inter Cell RRM (Radio Resource Management) 723, Connection Mobility Control 725, RB (Radio Bearer) Control 727, Radio Admission Control 729, eNB Measurement Configuration and Provision 731, and Dynamic Resource Allocation (Scheduler) 733.

The eNB 103 communicates with the aGW 701 (Access Gateway) via an S1 interface. The aGW 701 includes a User Plane 701a and a Control plane 701b. The control plane 701b provides the following components: SAE (System Architecture Evolution) Bearer Control 735 and MM (Mobile Management) Entity 737. The user plane 701b includes a PDCP (Packet Data Convergence Protocol) 739 and a user plane functions 741. It is noted that the functionality of the aGW 701 can also be provided by a combination of a serving gateway (SGW) and a packet data network (PDN) GW. The aGW 701 can also interface with a packet network, such as the Internet 743.

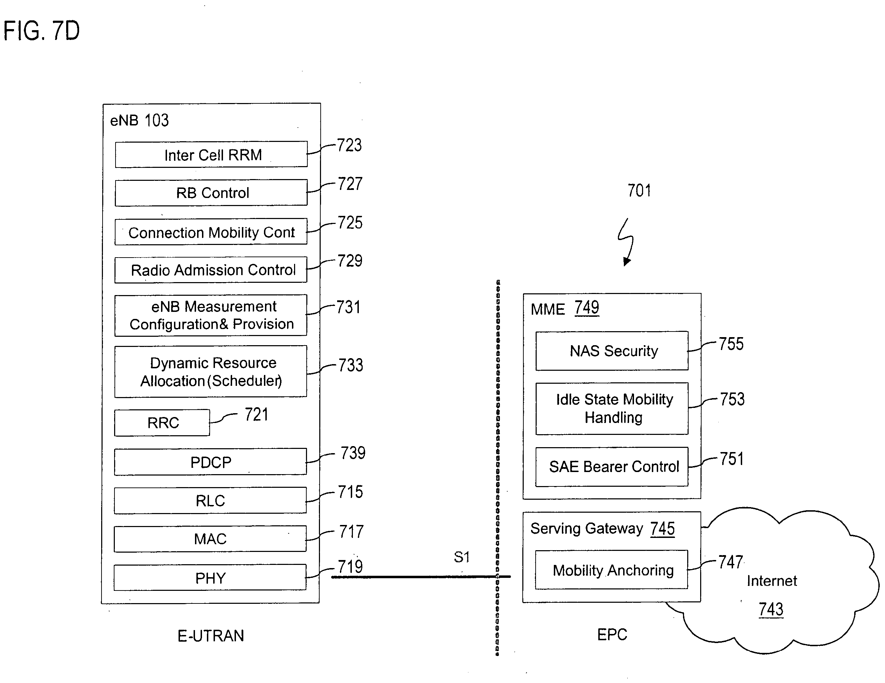

In an alternative embodiment, as shown in FIG. 7D, the PDCP (Packet Data Convergence Protocol) functionality can reside in the eNB 103 rather than the GW 701. Other than this PDCP capability, the eNB functions of FIG. 7C are also provided in this architecture.

In the system of FIG. 7D, a functional split between E-UTRAN and EPC (Evolved Packet Core) is provided. In this example, radio protocol architecture of E-UTRAN is provided for the user plane and the control plane. A more detailed description of the architecture is provided in 3GPP TS 36.300.

The eNB 103 interfaces via the S1 to the Serving Gateway 745, which includes a Mobility Anchoring function 747. According to this architecture, the MME (Mobility Management Entity) 749 provides SAE (System Architecture Evolution) Bearer Control 751, Idle State Mobility Handling 753, and NAS (Non-Access Stratum) Security 755.

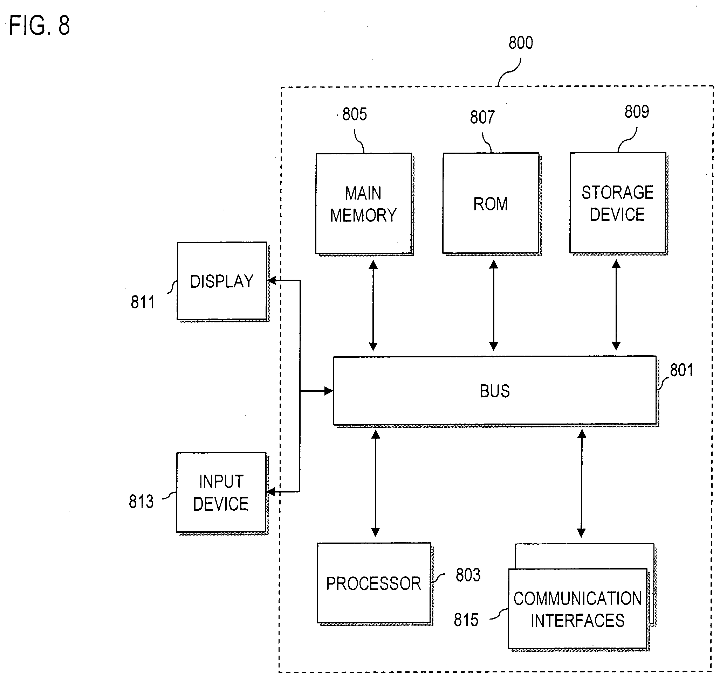

One of ordinary skill in the art would recognize that the processes for padding may be implemented via software, hardware (e.g., general processor, Digital Signal Processing (DSP) chip, an Application Specific Integrated Circuit (ASIC), Field Programmable Gate Arrays (FPGAs), etc.), firmware, or a combination thereof. Such exemplary hardware for performing the described functions is detailed below with respect to FIG. 8.

FIG. 8 illustrates exemplary hardware upon which various embodiments of the invention can be implemented. A computing system 800 includes a bus 801 or other communication mechanism for communicating information and a processor 803 coupled to the bus 801 for processing information. The computing system 800 also includes main memory 805, such as a random access memory (RAM) or other dynamic storage device, coupled to the bus 801 for storing information and instructions to be executed by the processor 803. Main memory 805 can also be used for storing temporary variables or other intermediate information during execution of instructions by the processor 803. The computing system 800 may further include a read only memory (ROM) 807 or other static storage device coupled to the bus 801 for storing static information and instructions for the processor 803. A storage device 809, such as a magnetic disk or optical disk, is coupled to the bus 801 for persistently storing information and instructions.

The computing system 800 may be coupled via the bus 801 to a display 811, such as a liquid crystal display, or active matrix display, for displaying information to a user. An input device 813, such as a keyboard including alphanumeric and other keys, may be coupled to the bus 801 for communicating information and command selections to the processor 803. The input device 813 can include a cursor control, such as a mouse, a trackball, or cursor direction keys, for communicating direction information and command selections to the processor 803 and for controlling cursor movement on the display 811.

According to various embodiments of the invention, the processes described herein can be provided by the computing system 800 in response to the processor 803 executing an arrangement of instructions contained in main memory 805. Such instructions can be read into main memory 805 from another computer-readable medium, such as the storage device 809. Execution of the arrangement of instructions contained in main memory 805 causes the processor 803 to perform the process steps described herein. One or more processors in a multi-processing arrangement may also be employed to execute the instructions contained in main memory 805. In alternative embodiments, hard-wired circuitry may be used in place of or in combination with software instructions to implement the embodiment of the invention. In another example, reconfigurable hardware such as Field Programmable Gate Arrays (FPGAs) can be used, in which the functionality and connection topology of its logic gates are customizable at run-time, typically by programming memory look up tables. Thus, embodiments of the invention are not limited to any specific combination of hardware circuitry and software.

The computing system 800 also includes at least one communication interface 815 coupled to bus 801. The communication interface 815 provides a two-way data communication coupling to a network link (not shown). The communication interface 815 sends and receives electrical, electromagnetic, or optical signals that carry digital data streams representing various types of information. Further, the communication interface 815 can include peripheral interface devices, such as a Universal Serial Bus (USB) interface, a PCMCIA (Personal Computer Memory Card International Association) interface, etc.

The processor 803 may execute the transmitted code while being received and/or store the code in the storage device 809, or other non-volatile storage for later execution. In this manner, the computing system 800 may obtain application code in the form of a carrier wave.

The term "computer-readable medium" as used herein refers to any medium that participates in providing instructions to the processor 803 for execution. Such a medium may take many forms, including but not limited to non-volatile media, volatile media, and transmission media. Non-volatile media include, for example, optical or magnetic disks, such as the storage device 809. Volatile media include dynamic memory, such as main memory 805. Transmission media include coaxial cables, copper wire and fiber optics, including the wires that comprise the bus 801. Transmission media can also take the form of acoustic, optical, or electromagnetic waves, such as those generated during radio frequency (RF) and infrared (IR) data communications. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, and EPROM, a FLASH-EPROM, any other memory chip or cartridge, a carrier wave, or any other medium from which a computer can read.

Various forms of computer-readable media may be involved in providing instructions to a processor for execution. For example, the instructions for carrying out at least part of the invention may initially be borne on a magnetic disk of a remote computer. In such a scenario, the remote computer loads the instructions into main memory and sends the instructions over a telephone line using a modem. A modem of a local system receives the data on the telephone line and uses an infrared transmitter to convert the data to an infrared signal and transmit the infrared signal to a portable computing device, such as a personal digital assistant (PDA) or a laptop. An infrared detector on the portable computing device receives the information and instructions borne by the infrared signal and places the data on a bus. The bus conveys the data to main memory, from which a processor retrieves and executes the instructions. The instructions received by main memory can optionally be stored on storage device either before or after execution by processor.

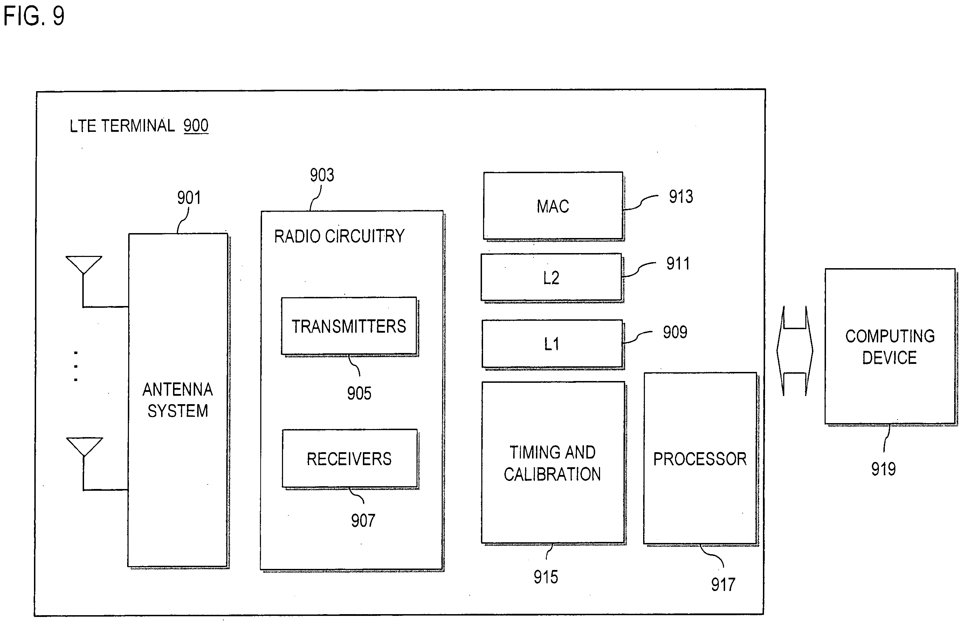

FIG. 9 is a diagram of exemplary components of an LTE terminal capable of operating in the systems of FIGs. 7A-7D, according to an embodiment of the invention. An LTE terminal 900 is configured to operate in a Multiple Input Multiple Output (MIMO) system. Consequently, an antenna system 901 provides for multiple antennas to receive and transmit signals. The antenna system 901 is coupled to radio circuitry 903, which includes multiple transmitters 905 and receivers 907. The radio circuitry encompasses all of the Radio Frequency (RF) circuitry as well as base-band processing circuitry. As shown, layer-1 (LI) and layer-2 (L2) processing are provided by units 909 and 911, respectively. Optionally, layer-3 functions can be provided (not shown). Module 913 executes all MAC layer functions. A timing and calibration module 915 maintains proper timing by interfacing, for example, an external timing reference (not shown). Additionally, a processor 917 is included. Under this scenario, the LTE terminal 900 communicates with a computing device 919, which can be a personal computer, work station, a PDA, web appliance, cellular phone, etc.

While the invention has been described in connection with a number of embodiments and implementations, the invention is not so limited but covers various obvious modifications and equivalent arrangements, which fall within the purview of the appended claims.

## Claims

1. A method comprising:
generating (501) a medium access control, MAC, protocol data unit including a header part and a payload part; and
inserting (503) at least one dummy padding sub-header at the beginning of the header part of the MAC protocol data unit, wherein padding is only within the header part and wherein the header part is padded with dummy bits to fit a transport block size.

2. A method according to claim 1, wherein a difference in size of the MAC protocol data unit and size of the radio link control, RLC, protocol data unit is either 2 bytes or 3 bytes.

3. A method according to any of claims 1 - 2, wherein the padding sub-header includes a reserved logical channel identifier, LCID, field to indicate padding, and
an extension field to specify whether an additional field is present.

4. A method according to any of claims 1 - 3, wherein one padding sub-header or two padding sub-headers are inserted within the header part of the MAC protocol data unit for padding of 1 byte or 2 bytes.

5. An apparatus (101, 103) comprising:
means for generating (105, 107) a medium access control, MAC, protocol data unit including a header part and a payload part, and inserting at least one dummy padding sub-header at the beginning of the header part of the MAC protocol data unit, wherein padding is only within the header part and wherein the header part is padded with dummy bits to fit a transport block size.

6. An apparatus (101, 103) according to claim 5, wherein a difference in size of the MAC protocol data unit and size of the radio link control, RLC, protocol data unit is either 2 bytes or 3 bytes.

7. An apparatus according to any of claims 5 - 6, wherein the padding sub-header includes a reserved logical channel identifier, LCID, field to indicate padding, and
an extension field to specify whether an additional field is present.

8. An apparatus according to any of claims 5 - 7, wherein one padding sub-header or two padding sub-headers are inserted within the header part of the MAC protocol data unit for padding of 1 byte or 2 bytes.

9. An apparatus (101, 103) according to any of claims 5 - 8, wherein the apparatus is a mobile station (101) or a base station (103).

10. A computer program product for performing a method according to any of claims 1-4.

11. A method comprising:
receiving (511) a medium access control, MAC, protocol data unit including a header part and a payload part, that includes at least one dummy padding sub-header at the beginning of the header part of the MAC protocol data unit, wherein padding is only within the header part and wherein the header part has been padded with dummy bits to fit a transport block size.

12. A method according to claim 11, wherein one padding sub-header or two padding sub-headers are inserted within the header part of the MAC protocol data unit for padding of 1 byte or 2 bytes.

13. An apparatus (101, 103) comprising:
means for receiving a medium access control, MAC, protocol data unit including a header part and a payload part, that includes at least one dummy padding sub-header at the beginning of the header part of the MAC protocol data unit, wherein padding is only within the header part and wherein the header part has been padded with dummy bits to fit a transport block size.

14. An apparatus method according to claim 13, wherein one padding sub-header or two padding sub-headers are inserted within the header part of the MAC protocol data unit for padding of 1 byte or 2 bytes.

15. An apparatus (101, 103) according to claim 13 or 14, wherein the apparatus is a mobile station (101) or a base station (103).

16. A computer program product for performing a method according to claim 11 or 12.

## Patentansprüche

1. Verfahren umfassend:
Erzeugen (501) einer Medium-Access-Control-(MAC-)Protokoll-Dateneinheit mit einem Header-Teil und einem Payload-Teil; und
Einfügen (503) mindestens eines Dummy-Padding-Sub-Headers am Anfang des Header-Teils der MAC-Protokoll-Dateneinheit, wobei das Auffüllen nur innerhalb des Header-Teils erfolgt und wobei der Header-Teil mit Dummy-Bits aufgefüllt wird, um eine Transportblockgröße zu erreichen.

2. Verfahren nach Anspruch 1, wobei ein Unterschied bei der Größe der MAC-Protokoll-Dateneinheit und der Größe der Funkverbindungssteuerungs-(RLC-)Protokoll-Dateneinheit entweder 2 Byte oder 3 Byte beträgt.

3. Verfahren nach einem der Ansprüche 1 bis 2, wobei der Padding-Sub-Header umfasst:
ein reserviertes Feld für die Kennung des logischen Kanals (Logical Channel Identifier, LCID) zur Angabe des Auffüllens und
ein Erweiterungsfeld zur Angabe, ob ein zusätzliches Feld vorhanden ist.

4. Verfahren nach einem der Ansprüche 1 bis 3, wobei ein Padding-Sub-Header oder zwei Padding-Sub-Header innerhalb des Header-Teils der MAC-Protokoll-Dateneinheit zum Auffüllen von 1 Byte oder 2 Byte eingefügt werden.

5. Vorrichtung (101, 103) umfassend:
Mittel zum Erzeugen (105, 107) einer Medium-Access-Control-(MAC-)Protokoll-Dateneinheit mit einem Header-Teil und einem Payload-Teil und zum Einfügen mindestens eines Dummy-Padding-Sub-Headers am Anfang des Header-Teils der MAC-Protokoll-Dateneinheit, wobei das Auffüllen nur innerhalb des Header-Teils erfolgt und wobei der Header-Teil mit Dummy-Bits aufgefüllt wird, um eine Transportblockgröße zu erreichen.

6. Vorrichtung (101, 103) nach Anspruch 5, wobei ein Unterschied bei der Größe der MAC-Protokoll-Dateneinheit und der Größe der Funkverbindungssteuerungs-(RLC-)Protokoll-Dateneinheit entweder 2 Byte oder 3 Byte beträgt.

7. Vorrichtung nach einem der Ansprüche 5 bis 6, wobei der Padding-Sub-Header umfasst:
ein reserviertes Feld für die Kennung des logischen Kanals (Logical Channel Identifier, LCID) zur Angabe des Auffüllens, und
ein Erweiterungsfeld zur Angabe, ob ein zusätzliches Feld vorhanden ist.

8. Verfahren nach einem der Ansprüche 5 bis 7, wobei ein Padding-Sub-Header oder zwei Padding-Sub-Header innerhalb des Header-Teils der MAC-Protokoll-Dateneinheit zum Auffüllen von 1 Byte oder 2 Byte eingefügt werden.

9. Vorrichtung (101, 103) nach einem der Ansprüche 5 bis 8, wobei es sich bei der Vorrichtung um eine mobile Station (101) oder eine Basisstation (103) handelt.

10. Computerprogrammprodukt zur Durchführung eines Verfahrens nach einem der Ansprüche 1 bis 4.

11. Verfahren umfassend:
Empfangen (511) einer Medium-Access-Control-(MAC-)Protokoll-Dateneinheit mit einem Header-Teil und einem Payload-Teil, die mindestens einen Dummy-Padding-Sub-Header am Anfang des Header-Teils der MAC-Protokoll-Dateneinheit umfasst, wobei das Auffüllen nur innerhalb des Header-Teils erfolgt und wobei der Header-Teil mit Dummy-Bits aufgefüllt wurde, um eine Transportblockgröße zu erreichen.

12. Verfahren nach Anspruch 11, wobei ein Padding-Sub-Header oder zwei Padding-Sub-Header innerhalb des Header-Teils der MAC-Protokoll-Dateneinheit zum Auffüllen von 1 Byte oder 2 Byte eingefügt werden.

13. Vorrichtung (101, 103) umfassend:
Mittel zum Empfangen (511) einer Medium-Access-Control-(MAC-)Protokoll-Dateneinheit mit einem Header-Teil und einem Payload-Teil, die mindestens einen Dummy-Padding-Sub-Header am Anfang des Header-Teils der MAC-Protokoll-Dateneinheit umfasst, wobei das Auffüllen nur innerhalb des Header-Teils erfolgt und wobei der Header-Teil mit Dummy-Bits aufgefüllt wurde, um eine Transportblockgröße zu erreichen.

14. Vorrichtungsverfahren nach Anspruch 13, wobei ein Padding-Sub-Header oder zwei Padding-Sub-Header innerhalb des Header-Teils der MAC-Protokoll-Dateneinheit zum Auffüllen von 1 Byte oder 2 Byte eingefügt werden.

15. Vorrichtung (101, 103) nach Anspruch 13 bis 14, wobei es sich bei der Vorrichtung um eine mobile Station (101) oder eine Basisstation (103) handelt.

16. Computerprogrammprodukt zur Durchführung eines Verfahrens nach Anspruch 11 oder 12.

## Revendications

1. Procédé comprenant :
la génération (501) d'une unité de données de protocole de contrôle d'accès au support, MAC, comportant une partie d'en-tête et une partie de données utiles ; et
l'insertion (503) d'au moins un sous en-tête de remplissage factice au début de la partie d'en-tête de l'unité de données de protocole MAC, dans lequel le remplissage est uniquement dans la partie d'en-tête et dans lequel la partie d'en-tête est remplie de bits factices pour s'adapter à une taille de bloc de transport.

2. Procédé selon la revendication 1, dans lequel une différence de taille de l'unité de données de protocole MAC et de taille de l'unité de données de protocole de contrôle de liaison radio, RLC, est de soit 2 octets soit 3 octets.

3. Procédé selon l'une quelconque des revendications 1-2, dans lequel le sous en-tête de remplissage comporte
un champ d'identifiant de canal logique, LCID, réservé pour indiquer le remplissage, et
un champ d'extension pour spécifier si un champ additionnel est présent.

4. Procédé selon l'une quelconque des revendications 1-3, dans lequel un sous en-tête de remplissage ou deux sous en-têtes de remplissage sont insérés dans la partie d'en-tête de l'unité de données de protocole MAC pour le remplissage de 1 octet ou 2 octets.

5. Appareil (101, 103) comprenant :
des moyens pour générer (105, 107) une unité de données de protocole de contrôle d'accès au support, MAC, comportant une partie d'en-tête et une partie de données utiles, et insérer au moins un sous en-tête de remplissage factice au début de la partie d'en-tête de l'unité de données de protocole MAC, dans lequel le remplissage est uniquement dans la partie d'en-tête et dans lequel la partie d'en-tête est remplie de bits factices pour s'adapter à une taille de bloc de transport.

6. Appareil (101, 103) selon la revendication 5, dans lequel une différence de taille de l'unité de données de protocole MAC et de taille de l'unité de données de protocole de contrôle de liaison radio, RLC, est de soit 2 octets soit 3 octets.

7. Appareil selon l'une quelconque des revendications 5-6, dans lequel le sous en-tête de remplissage comporte
un champ d'identifiant de canal logique, LCID, réservé pour indiquer le remplissage, et
un champ d'extension pour spécifier si un champ additionnel est présent.

8. Appareil selon l'une quelconque des revendications 5-7, dans lequel un sous en-tête de remplissage ou deux sous en-têtes de remplissage sont insérés dans la partie d'en-tête de l'unité de données de protocole MAC pour le remplissage de 1 octet ou 2 octets.

9. Appareil (101, 103) selon l'une quelconque des revendications 5-8, dans lequel l'appareil est une station mobile (101) ou une station de base (103).

10. Produit-programme informatique pour mettre en œuvre un procédé selon l'une quelconque des revendications 1-4.

11. Procédé comprenant :
la réception (511) d'une unité de données de protocole de contrôle d'accès au support, MAC, comportant une partie d'en-tête et une partie de données utiles, qui comporte au moins un sous en-tête de remplissage factice au début de la partie d'en-tête de l'unité de données de protocole MAC, dans lequel le remplissage est uniquement dans la partie d'en-tête et dans lequel la partie d'en-tête a été remplie de bits factices pour s'adapter à une taille de bloc de transport.

12. Procédé selon la revendication 11, dans lequel un sous en-tête de remplissage ou deux sous en-têtes de remplissage sont insérés dans la partie d'en-tête de l'unité de données de protocole MAC pour le remplissage de 1 octet ou 2 octets.

13. Appareil (101, 103) comprenant :
des moyens pour recevoir (511) une unité de données de protocole de contrôle d'accès au support, MAC, comportant une partie d'en-tête et une partie de données utiles, qui comporte au moins un sous en-tête de remplissage factice au début de la partie d'en-tête de l'unité de données de protocole MAC, dans lequel le remplissage est uniquement dans la partie d'en-tête et dans lequel la partie d'en-tête a été remplie de bits factices pour s'adapter à une taille de bloc de transport.

14. Procédé d'appareil selon la revendication 13, dans lequel un sous en-tête de remplissage ou deux sous en-têtes de remplissage sont insérés dans la partie d'en-tête de l'unité de données de protocole MAC pour le remplissage de 1 octet ou 2 octets.

15. Appareil (101, 103) selon la revendication 13 ou 14, dans lequel l'appareil est une station mobile (101) ou une station de base (103).

16. Produit-programme informatique pour mettre en œuvre un procédé selon la revendication 11 ou 12.
